# EUROPÄISCHE PATENTSCHRIFT

(11) **EP 2 334 958 B1**
(45) Veröffentlichungstag und Bekanntmachung des Hinweises auf die Patenterteilung: **17.05.2017**
(21) Anmeldenummer: 09782567.3
(22) Anmeldetag: 03.09.2009
(51) Int. Cl.: F16J 15/00

(54) **Turboverdichtergehäuse**
Turbocompressor housing
Carter de turbocompresseur

(30) Priorität: 25.09.2008 DE 102008048943
(43) Veröffentlichungstag der Anmeldung: 22.06.2011
(73) Patentinhaber: Siemens Aktiengesellschaft, 80333 München (DE)
(72) Erfinder: ZACHARIAS, Wolfgang, 47198 Duisburg (DE)
(86) Internationale Anmeldenummer: PCT/EP2009/061407
(87) Internationale Veröffentlichungsnummer: WO 2010/034602

(56) Entgegenhaltungen:
- WO-A-2007/000189
- DE-A1- 10 218 018
- US-A- 5 280 924
- US-A1- 2002 084 591

## Beschreibung

Die Erfindung betrifft ein Turboverdichtergehäuse mit einem drucktragenden Bauteil mit einer Bauteilwand, die eine mit einem Hochdruckmedium beaufschlagbare Hochdruckseite und eine der Hochdruckseite abgewandte mit einem Niederdruckmedium beaufschlagte Niederdruckseite aufweist, wobei die Bauteilwand eine von der Hochdruckseite zu der Niederdruckseite hin sich erstreckende Trennfuge, an der die Bauteilwand trennbar ist, sowie eine die Trennfuge statisch abdichtende Abdichteinrichtung aufweist, die von einem Hochdruckdichtelement und einem Niederdruckdichtelement gebildet ist, die in der Trennfuge angeordnet sind, wobei das Hochdruckdichtelement der Hochdruckseite benachbart und das Niederdruckdichtelement der Niederdruckseite benachbart angeordnet sind, wobei das Turboverdichtergehäuse einen Gehäusemantel und einen Gehäusedeckel aufweist, die aneinanderliegend die Trennfuge bilden, und die Hochdruckseite die Innenseite des Turboverdichtergehäuses und die Niederdruckseite die Außenseite des Turboverdichtergehäuses ist.

Ein Turboverdichter, wie er beispielsweise als ein Prozessgasverdichter in einer chemischen Industrieanlage Anwendung findet, weist ein Gehäuse auf, das im Betrieb des Turboverdichters mit in der Regel brennbarem und/oder toxischem, unter Druck stehenden Prozessgas gefüllt ist. Deshalb ist das Gehäuse gegenüber ihrer Umgebung derart abgedichtet, dass keine Leckagen an Prozessgas aus dem Gehäuse austreten können, so dass das Risiko einer Gefährdung der Umgebung des Turboverdichters möglichst gering ist.

Aus der US 5,280,924 ist bereits ein Verdichter bekannt, bei dem eine Trennfuge mittels zweier hintereinander abgeordneter O-Ringdichtungen abgedichtet ist und bei dem eine dazwischen liegende Kammer im Falle des Druckabfalls im Inneren des drucktragenden Bauteils auch seine Druckentlastung zwischen den beiden hintereinander angeordneten O-Ringdichtungen sorgt. Aus der DE 102 18 018 A1 ist eine Vorrichtung zum Behandeln pharmazeutischer Behältnisse bekannt, welche ein Sichtfenster aufweist, dass mittels zweier umlaufender Dichtungen zum Unterbinden eines Stoffaustauschen zwischen dem Inneren der Vorrichtung und der Umgebung abgedichtet ist. Zwischen den beiden umlaufenden Dichtungen wird ein Unterdruck erzeugt auch, um für einen sicheren Verschluss der Öffnung zu sorgen. Aus der US 2002/0084591 A1 ist eine Trockengaswellendichtung bekannt. Die WO 2007/000189 A1 beschäftigt sich mit einem Leckagedetektionssystem.

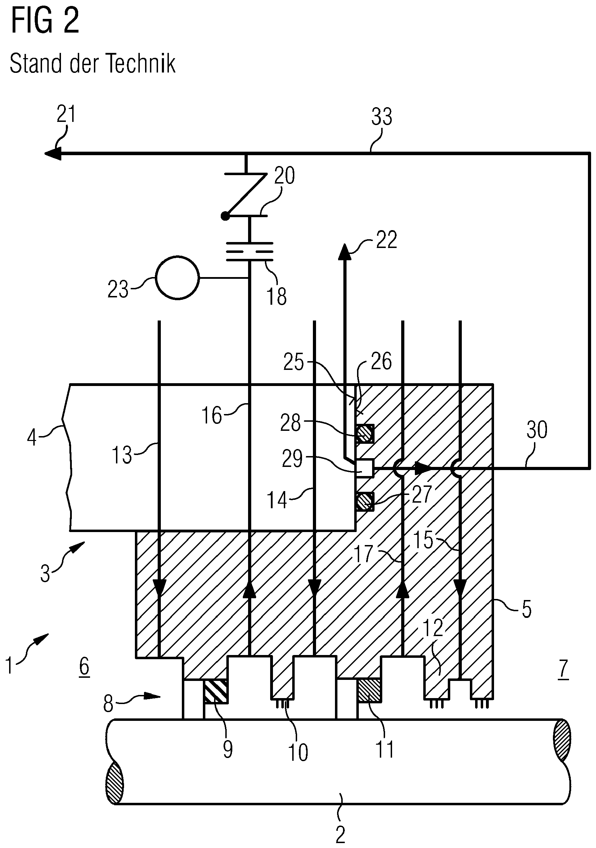

In Fig. 2 ist ein schematischer Ausschnitt eines Längsquerschnitts durch einen herkömmlichen Turboverdichter 1 gezeigt. Der Turboverdichter 1 weist eine Rotorwelle 2 und ein Gehäuse 3 auf, in dem die Rotorwelle 2 angeordnet ist. Das Gehäuse 3 ist vertikal geteilt ausgeführt, so dass das Gehäuse 3 einen Gehäusemantel 4 und einen Gehäusedeckel 5 aufweist. Das Gehäuse 3 könnte auch horizontal geteilt sein. Im Inneren des Gehäuses 3 herrecht beim Betrieb des Turboverdichters 1 eine thermodynamische Prozessbedingung, so dass innerhalb des Gehäuses 3 eine Prozessseite 6 definiert ist. Außerhalb des Gehäuses 3 herrscht eine atmosphärische Umgebungsbedingung 7.

Die Rotorwelle 2 ist außerhalb des Gehäuses 3 gelagert, so dass die Rotorwelle 2 durch eine Öffnung den Gehäusedeckel 5 durchdringt. Die Rotorwelle 2 ist gegen den Gehäusedeckel 5 mit einer Gleitringdichtung 8 abgedichtet. Die Gleitringdichtung 8 weist eine Primärdichtung 9, ein Zwischenlabyrinth 10, eine Sekundärdichtung 11 und eine Tertiärdichtung 12 auf. Die Primärdichtung 9 ist zum prozessseitigen Abdichten, und die Tertiärdichtung 12 ist zum atmosphärischen Abdichten eingerichtet. Prozessseitig ist die Primärdichtung 9 mit einer ersten Sperrgaszuführung 13 versehen, mit der Prozessgas als Sperrgas der Primärdichtung 9 zugeführt wird. Zwischen dem Zwischenlabyrinth 10 und der Sekundärdichtung 11 ist eine zweite Sperrgaszuführung 14 vorgesehen, durch die Stickstoff als Sperrgasstrom zugeführt wird. Dieser Sperrgasstrom teilt sich in der Gleitringsdichtung 8 auf, so dass ein erster Anteil das Zwischenlabyrinth 10 und ein zweiter Anteil die Sekundärdichtung 11 passiert. Der erste Anteil des Stickstoffsperrgasstroms vermischt sich mit dem die Primärdichtung 9 passierten Leckageanteil des Prozessgases und wird durch eine erste Leckagegasabführung 16 abgeführt. Die Tertiärdichtung 12 ist mit Inertgas, im Normalfall Stickstoff oder Luft, durch eine dritte Sperrgaszuführung 15 beaufschlagt, der anteilig die Tertiärdichtung 12 passiert und zusammen mit dem zweiten Anteil des Stickstoffsperrgasstroms der zweiten Sperrgaszuführung 14 durch eine zweite Leckagegasabführung 17 abgeführt wird. Die erste Leckagegasabführung 16 mündet in eine Fackelzuführleitung 33, die die Leckagegase zu einer Fackel 21 führt. Die zweite Leckageabgasabführung 17 mündet normalerweise in ein atmosphärisches Ventsystem.

In der ersten Leckageabführleitung 16 ist eine erste Blende 18 vorgesehen. Stromauf der ersten Blende 18 ist eine erste Druckhochabschaltung 23 vorgesehen. Sollte im Schadensfall beispielsweise die Primärdichtung 9 versagen, so würde sich in der ersten Leckageabführung 16 der Durchfluss derart erhöhen, dass stromauf der ersten Blende 18 der Druck sich erhöht, so dass die erste Druckhochabschaltungseinrichtung 23 ansprechen würde, wodurch der Turboverdichter 1 abgeschaltet werden könnte. Stromab der ersten Blende 18 ist eine Rückschlagklappe 20 vorgesehen, mit der eine eventuelle Rückströmung von der Fackel 21 in die erste Leckagegasabführung 16 unterbunden ist.

Der Gehäusemantel 4 ist zylindrisch ausgebildet, wobei der Gehäusemantel 4 stirnseitig eine erste Gehäusemantelstirnfläche 25 aufweist. An der Gehäusemantelstirnfläche 25 liegt der Gehäusedeckel 5 mit seiner Gehäusedeckelanliegefläche 26 an, so dass von der Gehäusemantelstirnfläche 25 und der Gehäusedeckelanliegefläche 26 eine Trennfuge gebildet ist. Zum statischen Abdichten der Trennfuge sind in der Gehäusedeckelanliegefläche 26 zwei konzentrisch zueinander angeordnete Ringnuten vorgesehen, wobei an der innenliegenden Ringnut ein inneres Dichtelement, hier ein innerer O-Ring 27, und in der außenliegenden Ringnut ein äußeres Dichtelement, hier ein äußerer O-Ring 28, angeordnet sind. Prozessseitig liegt an dem inneren O-Ring 27 beim Betrieb des Turboverdichters 1 ein hoher Druck, und atmosphärenseitig an dem äußeren O-Ring 28 Atmosphärendruck an, wodurch sich Druck von der Prozessseite 6 zu der Atmosphäre 7 über den inneren O-Ring 27 und den äußeren O-Ring 28 abbaut. Radial gesehen ist zwischen dem inneren O-Ring 27 und dem äußeren O-Ring 28 in der Gehäusedeckelanliegefläche 26 eine Zwischenringkammer 29 vorgesehen, an der eine Leckageabführleitung 30 angeschlossen ist, mit der eine Leckage des inneren O-Rings 27 via die zweite Blende 19 in die Fackelzuführleitung 33 abführbar ist. Dadurch, dass in der Zwischenringkammer 29 verglichen mit der Atmosphäre 7 ein Überdruck herrscht, tritt eine Leckage über den äußeren O-Ring 28 zur Atmosphäre 7 hin aus. Diese Leckage ist nur schwer kontrollierbar und belastet die Umgebung des Turboverdichters. Wird in dem Turboverdichter 1 beispielsweise ein explosives, schädliches und/oder toxisches Gas verdichtet, so ist hervorgerufen durch die Leckage an dem äußeren O-Ring 28 zur Atmosphäre 7 hin eine Schutzmaßnahme zur Abwendung von Gefahren vorzusehen. So könnte beispielsweise der Turboverdichter 1 an einem Ort mit ausreichender Belüftung und/oder in einer nach entsprechenden Regelwerken eingestuften Gefahrenzone aufgestellt werden. Außerdem könnte die Leckage außerhalb des Turboverdichters 1 mit entsprechenden Gaswarngeräten überwacht werden, oder der Turboverdichter 1 mit einer entsprechenden Einhausung versehen sein. Derartige Schutzmaßnahmen sind aufwendig und kostenintensiv. Des Weiteren ist dennoch eine Kontrolle der auftretenden Leckage kaum oder nicht möglich.

Aufgabe der Erfindung ist es, ein Turboverdichtergehäuse mit einer eine Trennfuge aufweisende Bauteilwand, das als das drucktragende Bauteil ausgebildet ist, zu schaffen, wobei eine Leckage durch die Trennfuge einfach und kontrollierbar abdichtbar ist.

Das erfindungsgemäße drucktragende Bauteil weist eine Bauteilwand auf, die eine mit einem Hochdruckmedium beaufschlagbare Hochdruckseite und eine der Hochdruckseite abgewandte, mit einem Niederdruckmedium beaufschlagte Niederdruckseite aufweist, wobei die Bauteilwand eine von der Hochdruckseite zu der Niederdruckseite hin sich erstreckende Trennfuge, an der die Bauteilwand trennbar ist, sowie eine die Trennfuge statisch abdichtende Abdichteinrichtung aufweist, die von einem Hochdruckdichtelement und einem Niederdruckdichtelement gebildet ist, die in der Trennfuge angeordnet sind, wobei das Hochdruckdichtelement der Hochdruckseite benachbart und das Niederdruckdichtelement der Niederdruckseite benachbart angeordnet sind sowie die Abdichteinrichtung eine in der Trennfuge zwischen dem Hochdruckdichtelement und dem Niederdruckdichtelement angeordnete Zwischenkammer und eine Unterdruckbeaufschlagungseinrichtung aufweist, mit der die Zwischenkammer mit Unterdruck beaufschlagbar ist, der niedriger als der Druck des Niederdruckmediums ist, so dass mit der Unterdruckbeaufschlagungseinrichtung von der Zwischenkammer eine Leckage abführbar ist.

Das erfindungsgemäße Turboverdichtergehäuse ist als das drucktragende Bauteil ausgebildet, wobei das Turboverdichtergehäuse einen Gehäusemantel und einen Gehäusedeckel aufweist, die aneinanderliegend die Trennfuge bilden, und die Hochdruckseite die Innenseite des Turboverdichtergehäuses und die Niederdruckseite die Außenseite des Turboverdichtergehäuses ist.

Mit der erfindungsgemäßen Unterdruckbeaufschlagungseinrichtung ist eine sichere und kontrollierbare Abdichtung der Trennfuge erreicht. Die mit der Unterdruckbeaufschlagungseinrichtung von der Zwischenkammer abgeführte Leckage kann überwacht werden, was im Zuge einer Sicherheitsbetrachtung und unter der Berücksichtigung von Umweltaspekten vorteilhaft ist. Für die Abdichtung der Trennfuge ist lediglich die Unterdruckbeaufschlagungseinrichtung vorzusehen, die außerhalb des drucktragenden Bauteils angesiedelt werden kann. Dadurch brauchen zum Vorsehen der erfindungsgemäßen Abdichteinrichtung der Trennfuge keine konstruktiven Änderungen gegenüber einem herkömmlichen drucktragenden Bauteil vorgesehen zu werden, wobei außerdem der Bauraum für die erfindungsgemäße Unterdruckbeaufschlagungseinrichtung klein ist. Ferner ist vorteilhaft für die erfindungsgemäße Abdichteinrichtung kein zusätzliches Sperrmedium notwendig.

Das Hochdruckdichtelement ist bevorzugt als ein inneres Dichtelement und das Niederdruckdichtelement ist bevorzugt als ein äußeres Dichtelement ausgebildet. Ferner ist es bevorzugt, dass das innere Dichtelement einen V-förmigen Querschnitt und/oder das äußere Dichtelement einen kreisrunden Querschnitt hat. Außerdem ist es bevorzugt, dass der Druck in der Zwischenkammer von der Unterdruckbeaufschlagungseinrichtung mit 5 bis 3000 mbar definiert ist.

Die Abdichteinrichtung weist bevorzugt eine Komprimiereinrichtung auf, mit der von der Zwischenkammer mit der Unterdruckbeaufschlagungseinrichtung abgeführte Leckage komprimierbar ist, so dass die Leckage an die Umgebung des drucktragenden Bauteils abführbar ist. Der Druck, auf den die Leckage mit der Komprimiereinrichtung komprimierbar ist, liegt bei Atmosphärendruck bis 5 bar. Bevorzugt weist das Turboverdichtergehäuse eine Fackelzuführleitung auf, durch die die Leckage mit der Komprimiereinrichtung an eine Fackel abführbar ist. Alternativ hierzu weist bevorzugt das Turboverdichtergehäuse eine Umgebungszuführleitung auf, durch die die Leckage mit der Komprimiereinrichtung an die Umgebung des Turboverdichtergehäuses abführbar ist.

Die Abdichteinrichtung weist bevorzugt eine Drucküberwachungseinrichtung auf, mit der der Druck in der Zwischenkammer überwachbar ist, so dass die Menge der Leckage erfassbar ist. Dadurch kann die Menge der Leckage vorteilhaft überwacht werden, so dass beispielsweise bei einer als zu hoch definierten Menge der Leckage ein Alarm geschaltet wird.

Die Abdichteinrichtung weist bevorzugt eine Gasanalyseeinrichtung auf, mit der die Gaszusammensetzung der Leckage in der Zwischenkammer ermittelbar ist. Dadurch kann festgestellt werden, aus welchen Gaskomponenten die Leckage sich zusammensetzt, wodurch ein Rückschluss auf den Ursprung der Menge der Leckage ermöglicht ist.

Im Folgenden wird eine bevorzugte Ausführungsform des erfindungsgemäßen Turboverdichters anhand der beigefügten schematischen Zeichnungen erläutert. Es zeigt:
Fig. 1 einen Ausschnitt eines schematischen Längsquerschnitts der Ausführungsform eines erfindungsgemäßen Turboverdichters, und
Fig. 2 einen schematischen Längsquerschnitt eines herkömmlichen Turboverdichters.

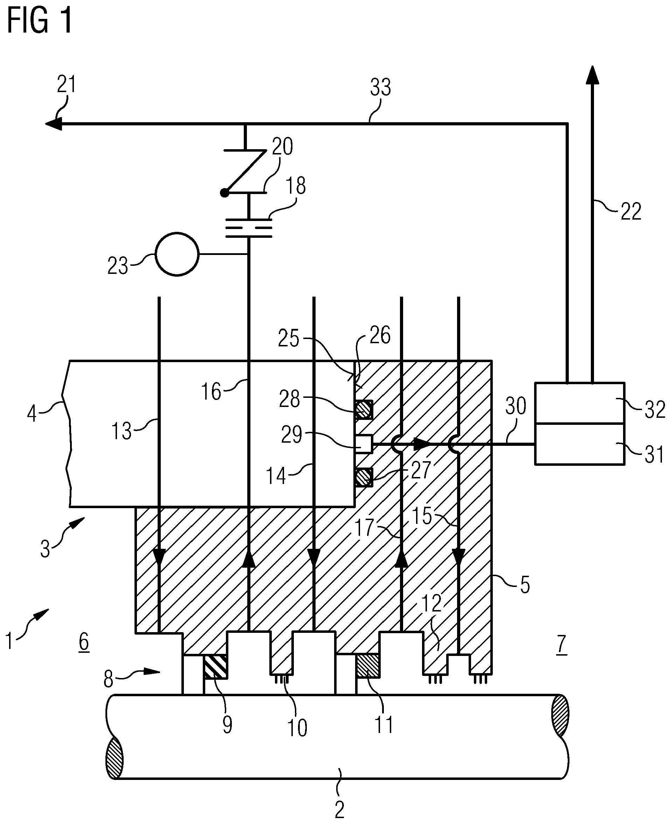

Wie es aus Fig. 1 ersichtlich ist, weist ein Turboverdichter 1 eine Rotorwelle 2 und ein Gehäuse 3 auf. Das Gehäuse 3 ist vertikal geteilt, so dass das Gehäuse 3 von einem Gehäusemantel 4 und einem Gehäusedeckel 5 gebildet ist, wobei der Gehäusemantel 4 zylindrisch ausgebildet ist und stirnseitig von dem Gehäusedeckel 5 abgedeckt ist. Beim Betrieb des Turboverdichters 1 herrschen im Inneren des Gehäuses 3 Prozessbedingungen, so dass in dem Inneren des Gehäuses 3 die Prozesseite 6 definiert ist. Außerhalb des Gehäuses 3 herrscht eine atmosphärische Umgebung 7.

Die Rotorwelle 2 ist außerhalb des Gehäuses 3 gelagert, so dass die Rotorwelle 2 an einem ihrer Längsendbereiche den Gehäusedeckel 5 durchdringt. An dieser Stelle ist die Rotorwelle 2 an dem Gehäusedeckel 5 mittels einer Gleitringdichtung 8 abgedichtet. Die Gleitringdichtung 8 ist gebildet von einer Primärdichtung 9, einer Sekundärdichtung 11 und einer Tertiärdichtung 12. Mit der Primärdichtung 9 wird die Abdichtung zur Prozessseite 6 hin bewerkstelligt, wohingegen mit der Tertiärdichtung 12 die Abdichtung zur Atmosphäre 7 hin bewerkstelligt wird. Zwischen der Primärdichtung 9 und der Sekundärdichtung 11 ist ein Zwischenlabyrinth 10 vorgesehen. Mit Sperrgas beaufschlagt ist mittels einer ersten Sperrgaszuführung 13 die Primärdichtung 9, und mittels einer zweiten Sperrgaszuführung 14 die Sekundärdichtung 11 und das Zwischenlabyrinth 10. Die Leckagen der Primärdichtung 9 und des Zwischenlabyrinths 10 werden durch eine erste Leckagegasabführung 16 abgeführt. Die Tertiärdichtung 12 ist mit einer dritten Sperrgaszuführung 15 mit Sperrgas beaufschlagt, wobei die Leckagen der Tertiärdichtung 12 und der Sekundärdichtung 11 von einer zweiten Leckagegasabführung 17 abgeführt werden. In der ersten Leckagegasabführung 16 ist eine Blende 18 vorgesehen, an der sich bei exorbitant hoher Leckage der Primärdichtung 9 beispielsweise bei Versagen der Primärdichtung 9 eine Druckerhöhung einstellt. Stromauf der Blende 18 ist eine Druckabschaltungseinrichtung 23 vorgesehen, die diese Druckerhöhung detektiert und ein Abschalten des Turboverdichters auslöst. Stromab der Blende 18 ist eine Rückschlagklappe 20 vorgesehen, um eine Rückströmung in die erste Leckagegasabführung 16 zu sperren. Die Leckagegasabführung 16 mündet in eine Fackelzuführleitung 33, die die durch die erste Leckagegasabführung 16 abgeführte Leckage an eine Fackel 21 leitet.

Der Gehäusemantel 4 weist stirnseitig eine ringförmige Gehäusemantelstirnfläche 25 auf, an die der Gehäusedeckel 5 mit seiner Gehäusedeckelanlegefläche 26 anliegt. In der Gehäusedeckelanliegefläche 26 sind zwei zueinander konzentrisch verlaufende Nuten vorgesehen, wobei in der inneren Nut ein innerer O-Ring 27 und in der äußeren Nut ein äußerer O-Ring 28 eingelegt ist. Der innere O-Ring 27 hat einen V-förmigen Querschnitt und dichtet statisch gegen die Prozessseite 6 ab. Der äußere O-Ring 27 hat einen kreisförmigen Querschnitt und dichtet statisch gegen die Atmosphäre 7 ab. Zwischen dem inneren O-Ring 27 und dem äußeren O-Ring 28 ist eine Zwischenringkammer 29 vorgesehen, die konzentrisch zu den O-Ringen 27 und 28 verläuft. An die Zwischenringkammer 29 angeschlossen ist eine Leckageabführleitung 30, die zu einem Unterdruckreservoir 31 führt. In dem Unterdruckreservoir 31 herrscht ein Druck, der unter dem Druck der Atmosphäre 7 liegt. Bei Betrieb des Turboverdichters 1 passiert prozessseitig Leckage den inneren O-Ring 27 und atmosphärenseitig den äußeren O-Ring 28. Die Leckage sammelt sich in der Zwischenringkammer 29 an. Aufgrund des Unterdrucks in dem Unterdruckreservoir 31 wird durch die Leckageabführleitung 30 die Leckage aus der Zwischenringkammer 29 abgesaugt, wobei die Leckage sich in dem Unterdruckreservoir 31 ansammelt.

An dem Unterdruckreservoir 31 ist eine Komprimiereinrichtung 32 vorgesehen, mit der die in dem Unterdruckreservoir 31 angesammelte Leckage komprimiert und an die Fackelzuführleitung 33 abgegeben wird. Dadurch wird die Leckage zur Fackel 21 abgegeben. Alternativ kann von der Komprimiereinrichtung 32 die Leckage an einen sicheren Ort an die Umgebung 7 abgegeben werden.

## Patentansprüche

1. Turboverdichtergehäuse (3) mit einem drucktragenden Bauteil mit einer Bauteilwand (4, 5), die eine mit einem Hochdruckmedium beaufschlagbare Hochdruckseite (6) und eine der Hochdruckseite abgewandte mit einem Niederdruckmedium beaufschlagte Niederdruckseite (7) aufweist, wobei die Bauteilwand (4, 5) eine von der Hochdruckseite (6) zu der Niederdruckseite (7) hin sich erstreckende Trennfuge (25, 26), an der die Bauteilwand (4, 5) trennbar ist, sowie eine die Trennfuge (25, 26) statisch abdichtende Abdichteinrichtung aufweist, die von einem Hochdruckdichtelement (27) und einem Niederdruckdichtelement (28) gebildet ist, die in der Trennfuge (25, 26) angeordnet sind, wobei das Hochdruckdichtelement (27) der Hochdruckseite (6) benachbart und das Niederdruckdichtelement (28) der Niederdruckseite (7) benachbart angeordnet sind,
wobei das Turboverdichtergehäuse (3) einen Gehäusemantel (4) und einen Gehäusedeckel (5) aufweist, die aneinanderliegend die Trennfuge (25, 26) bilden, und die Hochdruckseite (6) die Innenseite des Turboverdichtergehäuses (3) und die Niederdruckseite (7) die Außenseite des Turboverdichtergehäuses (3) ist,
**dadurch gekennzeichnet, dass**
sowie die Abdichteinrichtung eine in der Trennfuge (25, 26) zwischen dem Hochdruckdichtelement (27) und dem Niederdruckdichtelement (28) angeordnete Zwischenkammer (29) und eine Unterdruckbeaufschlagungseinrichtung (31) aufweist, mit der die Zwischenkammer (29) mit Unterdruck beaufschlagbar ist, der niedriger als der Druck des Niederdruckmediums (7) ist, so dass mit der Unterdruckbeaufschlagungseinrichtung (31) von der Zwischenkammer (29) eine Leckage abführbar ist.

2. Turboverdichtergehäuse (3) gemäß Anspruch 1, wobei die Abdichteinrichtung eine Komprimiereinrichtung (32) aufweist, mit der von der Zwischenkammer (29) mit der Unterdruckbeaufschlagungseinrichtung (31) abgeführte Leckage komprimierbar ist, so dass die Leckage an die Umgebung (7) des drucktragenden Bauteils (3) abführbar ist.

3. Turboverdichtergehäuse (3) gemäß Anspruch 1 oder 2, wobei die Abdichteinrichtung eine Drucküberwachungseinrichtung aufweist, mit der der Druck in der Zwischenkammer (29) überwachbar ist, so dass die Menge der Leckage erfassbar ist.

4. Turboverdichtergehäuse (3) gemäß einem der Ansprüche 1 bis 3, wobei die Abdichteinrichtung eine Gasanalyseeinrichtung aufweist, mit der die Gaszusammensetzung der Leckage in der Zwischenkammer (29) ermittelbar ist.

5. Turboverdichtergehäuse gemäß Anspruch 1, wobei das Hochdruckdichtelement als ein inneres Dichtelement (27) und das Niederdruckdichtelement als ein äußeres Dichtelement (28) ausgebildet sind.

6. Turboverdichtergehäuse gemäß Anspruch 5, wobei das innere Dichtelement (27) einen V-förmigen Querschnitt und/oder das äußere Dichtelement (28) einen kreisrunden Querschnitt hat.

7. Turboverdichtergehäuse gemäß einem der Ansprüche 1 bis 6, wobei der Druck in der Zwischenkammer (29) von der Unterdruckbeaufschlagungseinrichtung (31) mit 5 bis 3000 mbar definiert ist.

8. Turboverdichtergehäuse gemäß einem der Ansprüche 1 bis 7, wobei der Druck, auf den die Leckage mit der Komprimiereinrichtung (32) komprimierbar ist, bei Atmosphärendruck bis 5 bar liegt.

9. Turboverdichtergehäuse gemäß Anspruch 8, wobei das Turboverdichtergehäuse (3) eine Fackelzuführleitung (33) aufweist, durch die die Leckage mit der Komprimiereinrichtung (32) an eine Fackel (21) abführbar ist.

10. Turboverdichtergehäuse gemäß Anspruch 8 oder 9, wobei das Turboverdichtergehäuse eine Umgebungszuführleitung aufweist, durch die die Leckage mit der Komprimiereinrichtung (32) an die Umgebung (7) des Turboverdichtergehäuses (3) abführbar ist.

## Claims

1. Turbocompressor housing (3) with a pressurized component having a component wall (4, 5) which has a high-pressure side (6) that can be exposed to a high pressure medium and a low-pressure side (7) which is oriented away from the high-pressure side and is exposed to a low-pressure medium, wherein the component wall (4, 5) has a parting join (25, 26) which extends from the high-pressure side (6) to the low-pressure side (7) and at which the component wall (4, 5) can be parted, and a sealing device that statically seals the parting join (25, 26) and is formed by a high-pressure sealing element (27) and a low-pressure sealing element (28) which are arranged in the parting join (25, 26), wherein the high-pressure sealing element (27) is arranged adjacent to the high-pressure side (6) and the low-pressure sealing element (28) is arranged adjacent to the low-pressure side (7),
wherein the turbocompressor housing (3) has a housing body (4) and a housing lid (5) which, bearing against one another, form the parting join (25, 26), and the high-pressure side (6) is the inside of the turbocompressor housing (3) and the low-pressure side (7) is the outside of the turbocompressor housing (3),
**characterized in that**
the sealing device has an intermediate chamber (29) arranged in the parting join (25, 26) between the high-pressure sealing element (27) and the low-pressure sealing element (28), and a negative pressure device (31) which can generate a negative pressure in the intermediate chamber (29) that is lower than the pressure of the low-pressure medium (7) such that the negative pressure device (31) can remove leakage from the intermediate chamber (29).

2. Turbocompressor housing (3) according to Claim 1, wherein the sealing device has a compression device (32) which can compress the leakage removed from the intermediate chamber (29) by the negative pressure device (31), in order that the leakage can be removed to the surroundings (7) of the pressurized component (3).

3. Turbocompressor housing (3) according to Claim 1 or 2, wherein the sealing device has a pressure-monitoring device which can monitor the pressure in the intermediate chamber (29) in order to detect the quantity of leakage.

4. Turbocompressor housing (3) according to one of Claims 1 to 3, wherein the sealing device has a gas analysis device which can determine the gas composition of the leakage in the intermediate chamber (29).

5. Turbocompressor housing according to Claim 1, wherein the high-pressure sealing element is designed as an inner sealing element (27) and the low-pressure sealing element is designed as an outer sealing element (28).

6. Turbocompressor housing according to Claim 5, wherein the inner sealing element (27) has a V-shaped cross section and/or the outer sealing element (28) has a circular cross section.

7. Turbocompressor housing according to one of Claims 1 to 6, wherein the negative pressure device (31) defines a pressure in the intermediate chamber (29) of between 5 and 3000 mbar.

8. Turbocompressor housing according to one of Claims 1 to 7, wherein the pressure to which the leakage is compressed by the compression device (32) is between atmospheric pressure and 5 bar.

9. Turbocompressor housing according to Claim 8, wherein the turbocompressor housing (3) has a flare supply line (33) via which the compression device (32) can supply the leakage to a flare (21).

10. Turbocompressor housing according to Claim 8 or 9, wherein the turbocompressor housing has a discharge line via which the compression device (32) can remove the leakage to the surroundings (7) of the turbocompressor housing (3).

## Revendications

1. Carter ( 3 ) de turbocompresseur comprenant une pièce supportant la pression et ayant une paroi ( 4, 5 ), qui a une face ( 6 ) de haute pression pouvant être soumise à un fluide sous haute pression et une face ( 7 ) de basse pression éloignée de la face de haute pression et soumise à un fluide sous basse pression, la paroi ( 4, 5 ) de la pièce ayant un joint ( 25, 26 ) de séparation, qui s'étend de la face ( 6 ) de haute pression à la face ( 7 ) de basse pression et où la paroi ( 4, 5 ) peut être séparée, ainsi qu'un dispositif d'étanchéité rendant étanche statiquement le joint ( 25, 26 ) de séparation et formé d'un élément ( 27 ) d'étanchéité de haute pression et d'un élément ( 28 ) d'étanchéité de basse pression, qui sont disposés dans le joint ( 25, 26 ) de séparation, l'élément ( 27 ) d'étanchéité de haute pression étant monté au voisinage de la face ( 6 ) de haute pression et l'élément ( 28 ) d'étanchéité de basse pression étant monté au voisinage de la face ( 7 ) de basse pression, le carter ( 3 ) du turbocompresseur ayant une enveloppe ( 4 ) et un couvercle ( 5 ), qui forment l'un contre l'autre le joint ( 25, 26 ) de séparation et la face ( 6 ) de haute pression est la face intérieure du carter ( 3 ) du turbocompresseur et la face ( 7 ) de basse pression est la face extérieure du carter ( 3 ) du turbocompresseur,
**caractérisé en ce que**
le dispositif d'étanchéité a une chambre ( 29 ) intermédiaire disposée dans le joint ( 25, 26 ) de séparation entre l'élément ( 27 ) d'étanchéité de haute pression et l'élément ( 28 ) d'étanchéité de basse pression et un dispositif ( 31 ) de mise en dépression, par lequel la chambre ( 29 ) intermédiaire peut être mise à une pression, qui est plus basse que la pression du fluide ( 7 ) de basse pression, de manière à pouvoir évacuer une fuite de la chambre ( 29 ) intermédiaire par le dispositif ( 31 ) de mise en dépression.

2. Carter ( 3 ) de turbocompresseur suivant la revendication 1, dans lequel le dispositif d'étanchéité a un dispositif ( 32 ) de compression, par lequel la fuite évacuée de la chambre ( 29 ) intermédiaire par le dispositif ( 31 ) de mise en dépression peut être comprimée, de manière à pouvoir évacuer la fuite à l'atmosphère ( 7 ) entourant la pièce ( 3 ) supportant la pression.

3. Carter ( 3 ) de turbocompresseur suivant la revendication 1 ou 2, dans lequel le dispositif d'étanchéité a un dispositif de contrôle de la pression, par lequel on peut contrôler la pression dans la chambre ( 29 ) intermédiaire, de manière à pouvoir détecter la quantité de la fuite.

4. Carter ( 3 ) de turbocompresseur suivant l'une des revendications 1 à 3, dans lequel le dispositif d'étanchéité a un dispositif d'analyse des gaz, par lequel la composition en gaz de la fuite dans la chambre ( 29 ) intermédiaire peut être déterminée.

5. Carter ( 3 ) de turbocompresseur suivant la revendication 1, dans lequel l'élément d'étanchéité de haute pression est constitué sous la forme d'un élément ( 27 ) d'étanchéité intérieure et l'élément d'étanchéité de basse pression sous la forme d'un élément ( 28 ) d'étanchéité extérieure.

6. Carter ( 3 ) de turbocompresseur suivant la revendication 5, dans lequel l'élément ( 27 ) d'étanchéité intérieure a une section transversale en forme de V et/ou l'élément ( 28 ) d'étanchéité extérieure a une section transversale circulaire.

7. Carter ( 3 ) de turbocompresseur suivant l'une des revendications 1 à 6, dans lequel la pression dans la chambre ( 29 ) intermédiaire est définie par le dispositif ( 31 ) de mise en dépression en allant de 5 à 3000 mbar.

8. Carter ( 3 ) de turbocompresseur suivant l'une des revendications 1 à 7, dans lequel la pression, à laquelle la fuite peut être comprimée par le dispositif ( 32 ) de compression, va de la pression atmosphérique à 5 bar.

9. Carter ( 3 ) de turbocompresseur suivant la revendication 8, dans lequel le carter ( 3 ) de turbocompresseur a un conduit ( 13 ) d'envoi à une torche, par lequel la fuite peut être évacuée à une torche ( 21 ) par le dispositif ( 32 ) de compression.

10. Carter ( 3 ) de turbocompresseur suivant la revendication 8 ou 9, dans lequel le carter de turbocompresseur a un conduit d'envoi à l'atmosphère ambiante, par lequel la fuite peut être évacuée par le dispositif ( 32 ) de compression à l'atmosphère ambiante du carter ( 3 ) du turbocompresseur.
